# EUROPÄISCHE PATENTANMELDUNG

(11) **EP 0 791 304 A1**
(43) Veröffentlichungstag der Anmeldung: **27.08.1997**
(21) Anmeldenummer: 97101420.4
(22) Anmeldetag: 30.01.1997
(51) Int. Cl.: A43D 95/08, B01D 45/14

(54) **Schuhbearbeitungsmaschine**

(30) Priorität: 20.02.1996 DE 19606231
(71) Anmelder: HARDO MASCHINENBAU GmbH, 32107 Bad Salzuflen (DE)
(72) Erfinder: Gikadi, Theofani Prof.Dr., 32657 Lemgo (DE); Keiser, Marion Dipl.-Ing., 32825 Blomberg (DE)
(74) Vertreter: Hanewinkel, Lorenz, Dipl.-Phys.

(57) **Zusammenfassung**

Die Schuhbearbeitungsmaschine (1) weist mindestens ein Arbeitsaggregat (2) und eine mindestens einen Filter (4) aufweisende Filtereinrichtung (3) mit mindestens einem Exhaustor (5), welcher die zu reinigende staubhaltige Luft von dem Arbeitsaggregat (2) absaugt und unter Beaufschlagung des Filters (4) durch die Filtereinrichtung (3) hindurchbewegt, auf.

Dem Filter (4) ist eine von diesem durch eine Trennwand (6) mit mindestens einer Durchströmöffnung (11) abgetrennte Vorentstaubungseinrichtung (10) vorgeschaltet, welche vor der Durchströmöffnung (11) einen koaxial zu dieser angeordneten, mit Schaufeln und/oder mindestens einem Leit- und Prallblech bestückten Rotor (Zentrifugalabweiser) (12) aufweist. Dieser Zentrifugalabweiser erzeugt im rotierenden Zustand ein Zentrifugalkraftfeld, durch welches in der durch den Rotor (12) und die Durchströmöffnung (11) zum Filter (4) strömenden Luft befindliche Staubpartikel aus der Luft abgetrennt und vor der Trennwand (6) zurückgehalten werden.

## Beschreibung

Die Erfindung betrifft eine Schuhbearbeitungsmaschine mit mindestens einem Arbeitsaggregat und einer mindestens einen Filter aufweisenden Filtereinrichtung mit mindestens einem Exhaustor, welcher die zu reinigende staubhaltige Luft von dem Arbeitsaggregat absaugt und unter Beaufschlagung des Filters durch die Filtereinrichtung hindurchbewegt.

Eine derartige Schuhbearbeitungsmaschine ist z.B. aus dem DE-GM 91 01 868 bekanntgeworden. Dabei wird die staubbelastete Luft von dem Exhaustor angesaugt und durch Filterpatronen gedrückt, welche den Staub aus der Luft ausfiltern. Ein großes Problem besteht bei diesen Schuhbearbeitungsmaschinen jedoch darin, daß der Filter in so hohem Maße mit Staub belastet wird, daß dieser sich schon nach relativ kurzer Zeit zusetzt. Dadurch wird zum einen die Reinigungsleistung erheblich reduziert. Darüber hinaus führt dies insbesondere bei einem ansonsten vorteilhaften Nachschalten des Exhaustors hinter die Filtereinrichtung zu einem hohen Druckverlust, so daß die staubbelastete Luft nicht mehr richtig angesaugt wird. Es ist daher üblicherweise in diesen Maschinen vorgesehen, den Filter regelmäßig durch mechanisch induzierte Bewegungen des Filters oder des Filtermaterials, wie z.B. Abrütteln oder Abrollen der Innenseite der Filterpatrone mit einer Gummirolle, oder auch durch Ausblasen mittels geführter Luftströmungen aus speziellen Düsen, wieder zu reinigen. Eine häufige Reinigung des Filters führt jedoch durch die mechanischen bzw. abrasiven Belastungen zu einer vorzeitigen Schädigung des Filters, d.h. die Lebensdauer eines Filters wird hierdurch erheblich verringert.

Es ist daher Aufgabe der Erfindung, eine Schuhverarbeitungsmaschine der eingangs genannten Art derart zu verbessern, daß die Staubbelastung des Filters reduziert und damit die Standzeiten des Filters zwischen zwei Abreinigungsvorgängen mit möglichst einfachen und kostengünstigen Mitteln verlängert werden.

Diese Aufgabe wird erfindungsgemäß dadurch gelöst, daß dem Filter eine von diesem durch eine Trennwand mit mindestens einer Durchströmöffnung abgetrennte Vorentstaubungseinrichtung vorgeschaltet ist, welche vor der Durchströmöffnung einen koaxial zu dieser angeordneten, mit Schaufeln und/oder mindestens einem Leit- und/oder Prallblech bestückten Rotor (Zentrifugalabweiser) aufweist, welcher im rotierenden Zustand ein Zentrifugalkraftfeld erzeugt, durch welches in der durch den Rotor und die Durchströmöffnung zum Filter strömenden Luft befindliche Staubpartikel aus der Luft abgetrennt und vor der Trennwand zurückgehalten werden.

Bei dem erfindungsgemäßen Zentrifugalabweiser wird der mit Staubpartikeln verunreinigte Luftstrom von außen nach innen durch den vorzugsweise mit Schaufeln bestückten Rotor geführt und gelangt dann durch die Durchströmöffnung zum Filter.

Im Bereich des Rotoreintritts wird der mit den Partikeln beaufschlagte Luftstrom durch die Schaufeln zu einer definierten Rotationsbewegung gezwungen. Aufgrund der Rotation wirken auf die Partikel Fliehkräfte, die den Strömungskräften entgegenwirken. Die leichteren Partikel, z.B. kleinere und leichtere Späne, werden mit der Strömung durch die Durchströmöffnung mitgerissen, während die schwereren Partikel durch die Zentrifugalkraft aus dem Luftstrom herausgeschleudert werden. Das Verhältnis von durchgehenden zu abgewiesenen Partikeln ist abhängig vom Verhältnis der Strömungskraft zur Zentrifugalkraft, d.h. es ist abhängig von der Ansaugkraft des Exhaustors und der Rotationsgeschwindigkeit des Zentrifugalabweisers.

Mit Hilfe dieser erfindungsgemäßen Vorentstaubungseinrichtung können große Volumenströme bei gleichzeitig geringer Baugröße und geringem technischen und somit auch kostengünstigen Aufwand bewältigt werden. Der zusätzliche Strömungswiderstand durch den Zentrifugalabweiser ist vorteilhafterweise nur gering.

Anstelle einer Beschaufelung kann der Rotor auch ein sich zylindrisch um die Rotationsachse, entlang der Rotationsachse erstreckendes Leit- und Prallblech aufweisen. Dieses Leit- und Prallblech sollte entweder Löcher oder Schlitze, vorzugsweise parallel zur Rotationsachse, aufweisen. Das Blech kann aus Metall, aber auch aus anderen Werkstoffen gefertigt sein. Ein solcher Zentrifugalabweiser nach Art einer Lochtrommel oder dgl. ist zwar günstiger in der Herstellung als ein beschaufelter Rotor, weist aber in der Praxis eine geringere Effizienz auf.

Die Unteransprüche enthalten vorteilhafte Weiterbildungen und Ausgestaltungen der erfindungsgemäßen Schuhbearbeitungsmaschine.

Die Rotorschaufeln des Rotors sind vorzugsweise an einer Rotorplatte und/oder Rotorwelle ringförmig um die Rotationsachse in äquidistanten Abständen zueinander und im Abstand zur Rotationsachse angeordnet und erstrecken sich unter Bildung eines Käfigs im wesentlichen parallel zur Rotationsachse von der Rotorplatte und/oder Rotorwelle weg.

Die freien Enden der Rotorschaufeln sind vorteilhafterweise durch einen koaxial zur Rotationsachse angeordneten Stabilisierungsring untereinander verbunden. Durch diesen Stabilisierungsring werden die Rotorschaufeln auch bei höheren Rotationsgeschwindigkeiten nicht durch die auftretenden Zentifugalkräfte endseitig auseinandergedrückt. Die Rotorschaufeln können daher weniger massiv aufgebaut werden als ohne Stabilisierungsring.

Besonders vorteilhaft ist es, wenn der Rotor mit seiner Rotorplatte und/oder Rotorwelle in einem Abstand von der Durchströmöffnung parallel zu dieser in einem Lager gehalten ist und mit seinen Schaufeln in Richtung Durchströmöffnung weist und mit seinem Stabilisierungsring mit einer Schleifdichtung gegen die Trennwand abgedichtet die Durchströmöffnung umschließt bzw. überdeckt. Diese Schleifdichtung kann z.B. eine Bürste oder dgl. sein. Hierdurch wird verhindert, daß der Luftstrom den Zentrifugalabweiser bei höheren Rotationsgeschwindigkeiten quasi umgehen kann.

Die Rotorschaufeln können in verschiedenen Ausführungsformen ausgestaltet sein. In der einfachsten Form erstrecken sich die Rotorschaufeln radial geradlinig nach außen. Es ist jedoch auch möglich, um eine höhere Effizient bei geringeren Drehzahlen zu erreichen, die Rotorschaufeln in Rotationsrichtung konvex gekrümmt anzuordnen. Ebenso ist es auch möglich, die Rotationsschaufeln unter einem Winkel entgegen der Rotationsrichtung anzustellen. Auch dies führt zu einer Erhöhung der nach außen drückenden Kräfte bei schon geringeren Rotationsgeschwindigkeiten.

Der Rotor kann prinzipiell bei entsprechender Schaufelanstellung durch die an dem Exhaustor erzeugte Luftströmung angetrieben werden. In diesem Fall kann ein Motor eingespart werden. Bei der Verwendung eines motorischen Antriebs kann jedoch die Effizienz erheblich erhöht werden und auch das Verhältnis von Durchströmquerschnitt, d.h. Druckverlust und Effizienz bezüglich der Reinigungswirkung, exakt auf die jeweiligen Bedürfnisse eingestellt werden. Auf diese Weise können über 90 % aller Staubpartikel in der Vorentstaubungsanlage zurückgehalten werden.

Die Erfindung wird im folgenden unter Hinweis auf die beigefügten Zeichnungen anhand von Ausführungsbeispielen näher erläutert. Es stellen dar:
- Fig. 1: eine schematische Darstellung der erfindungsgemäßen Schuhbearbeitungsmaschine,
- Fig. 2a: eine schematische Darstellung eines Schnitts durch den Zentrifugalabweiser, mit einem rechteckigen geradlinigen Schaufelquerschnitt,
- Fig. 2b: eine Draufsicht auf eine Schaufel, bei der sich die radiale Innenkante und die radiale Außenkante axial von der Rotorplatte aus unter zunehmendem radialen Abstand zur Rotationsachse erstreckt,

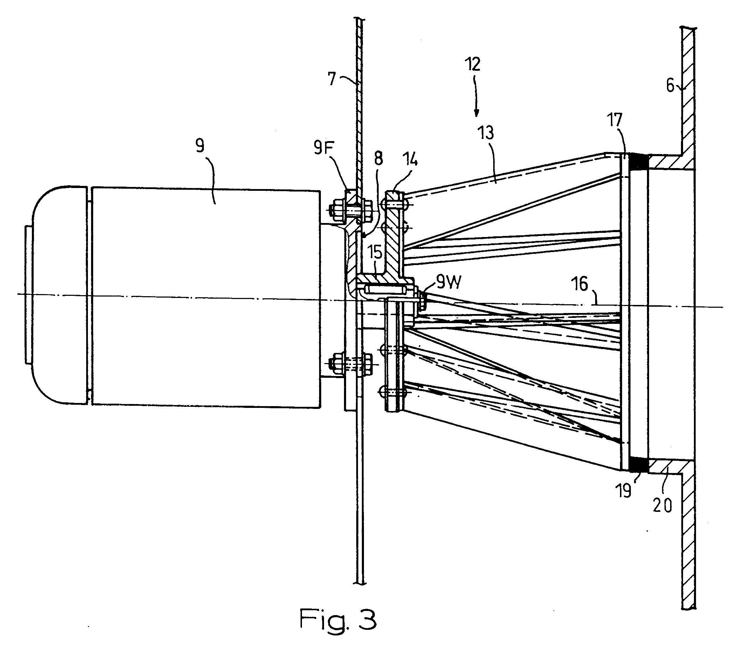

- Fig. 3: eine Seitenansicht mit Teilschnitt des erfindungsgemäßen Zentrifugalabweisers mit zugehörigem Motor,

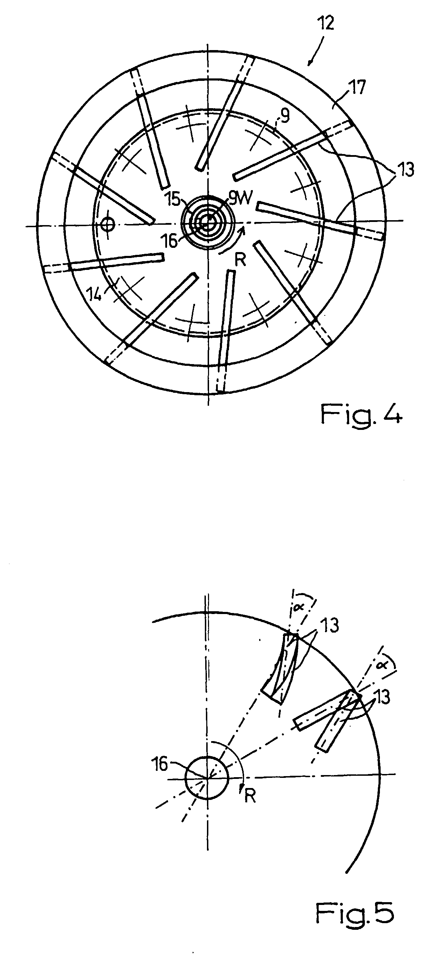

- Fig. 4: eine stirnseitige Draufsicht von der Durchströmöffnung aus auf den Zentrifugalabweiser mit Motor gemäß Fig 3,
- Fig. 5: ein schematischer Schnitt durch die Schaufeln senkrecht zur Rotationsachse zur Darstellung verschiedener Schaufelquerschnitte und Anstellwinkel.

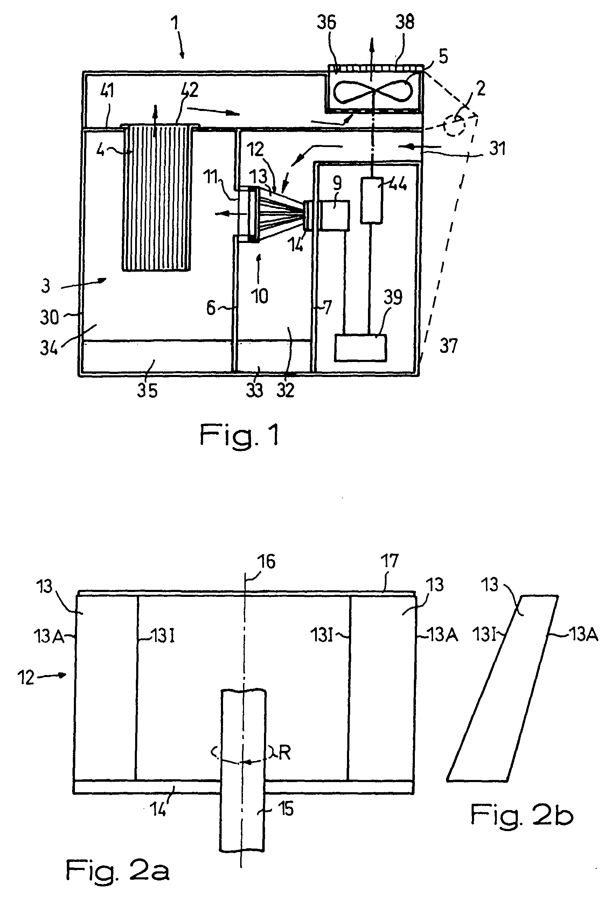

Gemäß dem Ausführungsbeispiel nach Fig. 1 weist die erfindungsgemäße Schuhbearbeitungsmaschine (1) ein oder mehrere Arbeitsaggregate (2), wie z.B. Schleif-, Fräsaggregate, Bimser oder dgl., auf. Die beim Bearbeiten der Schuhe mit den Arbeitsaggregaten (2) entstehende staubhaltige Luft wird durch eine dem Arbeitsaggregat (2) zugeordnete und im Abstand zu diesem angeordnete Staubluftöffnung (31) mittels eines Exhaustors (5) (ein handelsübliches Staubgebläse) in eine Vorentstaubungskammer (32) eingesogen. Diese Vorentstaubungskammer (32) befindet sich zwischen einer Feinfilterkanmer und einer Maschinenkammer (37) im Maschinengehäuse (30) der Schuhbearbeitungsmaschine (1). Über eine Durchströmöffnung (11) in der zwischen der Feinfilterkammer (34) und der Vorentstaubungskammer (32) befindlichen Trennwand (6) ist die Vorentstaubungskammer (32) mit der Feinfilterkammer (34) verbunden.

Vor der Durchströmöffnung (11) befindet sich ein koaxial zu dieser angeordneter beschaufelter Rotor (12) (Zentrifugalabweiser). Die Rotorschaufeln (13) des Rotors (12) sind an einer Rotorplatte (14), welche wiederum an einer Rotorwelle (15) befestigt ist, ringförmig um die Rotationsachse (16) in äquidistanten Abständen zueinander und im Abstand zur Rotationsachse (16) angeordnet. Sie erstrecken sich unter Bildung eines Käfigs im wesentlichen parallel zur Rotationsachse (16) von der Rotorplatte (14) und der Rotorwelle (15) weg. Die freien Enden der Rotorschaufeln (13) sind durch einen koaxial zur Rotationsachse (16) angeordneten Stabilisierungsring (17) untereinander verbunden. Die Rotorschaufeln (13) erstrecken sich geradlinig nach außen und sind unter einem Winkel α entgegen der Rotationsrichtung (R) angestellt. Die radiale Innenkante (13 I) und die radiale Außenkante (13 A) der Rotorschaufeln (13) erstecken sich axial von der Rotorplatte (14) aus unter zunehmendem radialen Abstand zur Rotationsachse (16), wobei sich gleichzeitig die radiale Breite der einzelnen Rotorschaufeln (13) zum freien Ende hin verringert.

In der der Trennwand (6) zur Feinfilterkammer (34) gegenüberliegenden Maschinenkammertrennwand (7) befindet sich koaxial zur Durchströmöffnung (11) eine Öffnung (8). In der Maschinenkammer (37) befindet sich an der Maschinenkammertrennwand (7) angeflanscht ein Motor (9), wobei der Flansch (9 F) des Motors (9) die Öffnung (8) in der Maschinenkammertrennwand (7) dichtend abdeckt. Die Antriebwelle (9 W) des Motors (9) erstreckt sich in die Vorentstaubungskammer (32) und ist dort über die hohle Welle des Rotors (15) mit der Rotorplatte (14) verbunden.

Der Rotor (12) ist somit mit seiner Rotorplatte (14) in einem Abstand von der Durchströmöffnung (11) parallel zu dieser gelagert. Er weist mit seinen Schaufeln (13) in Richtung Durchströmöffnung (11). Von der Trennwand (6) zur Feinfilterkammer (34) erstreckt sich eine ringförmige Auskragung (20) um die Durchströmöffnung (11) in Richtung Rotor (12). Am rotorseitigen Ende der ringförmigen Auskragung (20) befindet sich eine Schleifdichtung (19) in Form einer Bürste oder dgl., welche gegen den Stabilisierungsring (17) des Zentrifugalabweisers (12) drückt. Auf diese Weise umschließt bzw. überdeckt der Zentrifugalabweiser (12) mit seinem Stabilisierungsring (17) die Durchströmöffnung (11) und ist dabei gegen die Trennwand (6) abgedichtet.

Die durch die Staubluftöffnung (31) eingesogene staubbelastete Luft strömt durch den Zentrifugalabweiser (12) und die Durchströmöffnung (11) in die Feinfilterkammer (34). Im rotierenden Zustand wird durch den Zentrifugalabweiser (12) ein Zentrifugalkraftfeld erzeugt, durch welches die in der Luft befindlichen schwereren Staubpartikel aus der Luft abgetrennt und vor der Trennwand (6) in der Vorentstaubungskammer (32) zurückgehalten werden.

Zu welchem Anteil die Staubpartikel aus der Luft entfernt werden, ist abhängig von der Rotationsgeschwindigkeit des Zentrifugalabweisers (12) sowie der gewählten Flügelform und Anstellung. Bei einer Regelung ist darauf zu achten, daß bei gleichzeitig möglichst großer Entstaubungseffizienz der Strömungswiderstand durch den Zentrifugalabweiser (12) nicht zu groß wird.

In der Feinfilterkammer (34) befindet sich ein Filter (4) in Form einer im wesentlichen zylindrischen Filterpatrone (4). Diese Filterpatrone (4) weist eine offene und eine geschlossene Stirnseite auf, wobei die Mantelfläche und die geschlossene Stirnfläche die Filterfläche bilden. Um die Oberfläche des Filters (4) zu vergrößern, werden üblicherweise hier Sternfilterpatronen (4) verwendet. Die Filterpatrone (4) ist vor einer Öffnung (42) in der Deckwand (41) der Feinfilterkammer (34) mit der offenen Stirnseite nach oben abdichtend und auswechselbar eingehängt. Dies geschieht üblicherweise mit einer bajonettverschlußartigen Einhängevorrichtung.

Die vorgereinigte Luft wird nun in der Feinfilterkammer (34) durch die Filterpatrone (4) gesaugt und entweicht dann durch die oben offene Stirnseite zum Exhaustor (5). Um die Geräuschbelästigungen durch den Exhaustor (5) zu reduzieren, befindet sich an einer dahinter liegenden Reinluftöffnung (36) am Maschinengehäuse (30) ein Schalldämpfer (38).

Im vorliegenden Ausführungsbeispiel ist der Exhaustor (5) dem Feinfilter (4) nachgeschaltet, um zu verhindern, daß der Exhaustor (5) mit der verstaubten Luft in Kontakt kommt und dadurch verunreinigt wird. Selbstverständlich ist es natürlich auch möglich, den Exhaustor (5) der Vorentstaubungseinrichtung (10) nachzuschalten und den Feinfilter (4) vorzuschalten. Ebenso sind auch völlig andere Filtertypen, wie z.B. eine einfache Filterwand oder auch einfache Baumwollsäcke oder dgl., möglich.

Der Motor (44) des Exhaustors (38) befindet sich bei der vorliegenden Ausführungsform gemäß Fig. 1 ebenfalls in der Maschinenkammer (37).

Vorzugsweise befindet sich unterhalb der Vorentstaubungseinrichtung (10) in der Vorentstaubungskammer (32) sowie unterhalb der Filterpatrone (4) in der Feinfilterkammer (34) jeweils ein Staubkasten (33, 35). In diesen Staubkästen (33, 35) wird der jeweils abgeschiedene Staub gesammelt. Sie sind z.B. als Schubladen ausgeführt und durch abdichtend verschließbare Öffnungen im Maschinengehäuse (30) zum Reinigen entnehmbar.

Bei einer besonders vorteilhaften Ausführungsform befinden sich oberhalb der Staubkästen (33, 35) unter der Vorentstaubungseinrichtung (10) und unterhalb der Filterpatrone (4) Leitbleche, welche den herunterfallenden Staub in den Staubkasten (33, 35) leiten und dort zurückhalten. Diese Leitbleche können z.B. einfache schräg in die jeweilige Kammer (32, 34) eingesetzte Bleche sein, welche schräg übereinander angeordnet sind, so daß der darauffallende Staub kaskadenförmig über die Bleche nach unten in den Staubkasten (33, 35) rutscht.

Der Rotormotor (9) und der Gebläsemotor (44) des Exhaustors (5) sind vorzugsweise mit einer Steuereinrichtung (39) verbunden. Diese Steuereinrichtung (39) verhindert, daß bei einem ausgeschalteten Rotormotor (9) der Exhaustor (5) in Betrieb genommen wird, bzw. daß der Rotormotor (9) vor dem Exhaustor (5) ausgeschaltet wird, da ansonsten bei stehendem Zentrifugalabweiser (12) und laufendem Exhaustor (5) die Gefahr besteht, daß ein Teil des abgesammelten groben Staubs durch die Durchströmöffnung (11) gegen den Filter (4) gesaugt wird und diesen dann letztendlich doch noch belastet. Bei dieser Steuereinrichtung (39) kann es sich selbstverständlich auch um einen einfachen Schalter handeln, welcher eine Inbetriebnahme des Exhaustors (5) bei ausgeschaltetem Rotormotor (9) verhindert.

## Patentansprüche

1. Schuhbearbeitungsmaschine (1) mit mindestens einem Arbeitsaggregat (2) und einer mindestens einen Filter (4) aufweisenden Filtereinrichtung (3) mit mindestens einem Exhaustor (5), welcher die zu reinigende staubhaltige Luft von dem Arbeitsaggregat (2) absaugt und unter Beaufschlagung des Filters (4) durch die Filtereinrichtung (3) hindurchbewegt,
dadurch gekennzeichnet,
daß dem Filter (4) eine von diesem durch eine Trennwand (6) mit mindestens einer Durchströmöffnung (11) abgetrennte Vorentstaubungseinrichtung (10) vorgeschaltet ist, welche vor der Durchströmöffnung (11) einen koaxial zu dieser angeordneten, mit Schaufeln und/oder mindestens einem Leit- und Prallblech bestückten Rotor (Zentrifugalabweiser) (12) aufweist, welcher im rotierenden Zustand ein Zentrifugalkraftfeld erzeugt, durch welches in der durch den Rotor (12) und die Durchströmöffnung (11) zum Filter (4) strömenden Luft befindliche Staubpartikel aus der Luft abgetrennt und vor der Trennwand (6) zurückgehalten werden.

2. Schuhbearbeitungsmaschine nach Anspruch 1, dadurch gekennzeichnet, daß der Rotor ein unter Bildung einer Trommel sich im wesentlichen zylindrisch um die Rotationsachse (16) angeordnetes, längs der Rotationsachse (16) erstreckendes, mit einer Rotorplatte und/oder Rotorwelle verbundenes, gelochtes und/oder geschlitztes Leit- und Prallblech aufweist.

3. Schuhbearbeitungsmaschine nach Anspruch 1, dadurch gekennzeichnet, daß die Rotorschaufeln (13) des Rotors (12) an einer Rotorplatte (14) und/oder Rotorwelle (15) ringförmig um die Rotationsachse (16) in äquidistanten Abständen zueinander und im Abstand zur Rotationsachse (16) angeordnet sind und sich unter Bildung eines Käfigs im wesentlichen parallel zur Rotationsachse (16) von der Rotorplatte (14) und/oder Rotorwelle (15) weg erstrecken.

4. Schuhbearbeitungsmaschine nach Anspruch 1 oder 3, dadurch gekennzeichnet, daß die freien Enden der Rotorschaufeln (13) durch einen koaxial zur Rotationsachse (16) angeordneten Stabilisierungsring (17) untereinander verbunden sind.

5. Schuhbearbeitungsmaschine nach einem der Ansprüche 3 oder 4, dadurch gekennzeichnet, daß die Rotorschaufeln (13) sich radial geradlinig nach außen erstrecken.

6. Schuhbearbeitungsmaschine nach einem der Ansprüche 3 oder 4, dadurch gekennzeichnet, daß die Rotorschaufeln (13) in Rotationsrichtung (R) konvex gekrümmt sind.

7. Schuhbearbeitungsmaschine nach einem der Ansprüche 3 bis 6, dadurch gekennzeichnet, daß die Rotorschaufeln (13) unter einem Winkel (α) entgegen der Rotationsrichtung (R) angestellt sind.

8. Schuhbearbeitungsmaschine nach einem oder mehreren der vorstehenden Ansprüche, dadurch gekennzeichnet, daß die radiale Innenkante (13 I) und/oder die radiale Außenkante (13 A) der Rotorschaufeln (13) sich axial parallel zur Rotationsachse (16) erstrecken.

9. Schuhbearbeitungsmaschine nach einem oder mehreren der vorstehenden Ansprüche, dadurch gekennzeichnet, daß die radiale Innenkante (13 I) und/oder die radiale Außenkante (13 A) der Rotorschaufeln (13) sich axial von der Rotorplatte (14) und/oder Rotorwelle (15) aus unter zunehmendem radialen Abstand zur Rotationsachse (16) erstrecken.

10. Schuhbearbeitungsmaschine nach einem oder mehreren der vorstehenden Ansprüche, dadurch gekennzeichnet, daß der Rotor (12) mit seiner Rotorplatte (14) und/oder Rotorwelle (15) in einem Abstand von der Durchströmöffnung (11) parallel zu dieser in einem Lager (18) gehalten ist und mit seinen Schaufeln (13) und/oder seinem Leit- und Prallblech in Richtung Durchströmöffung (11) weist und mit seinem Stabilisierungsring (17) oder dem ringförmigen freien Ende des Leit- und Prallblechs, mit einer Schleifdichtung (19) gegen die Trennwand (6) abgedichtet, die Durchströmöffnung (11) umschließt (überdeckt).

11. Schuhbearbeitungsmaschine nach einem oder mehreren der vorstehenden Ansprüche, dadurch gekennzeichnet, daß der Rotor (12) durch die von dem Exhaustor (5) erzeugte Luftströmung angetrieben wird.

12. Schuhbearbeitungsmaschine nach einem oder mehreren der vorstehenden Ansprüche 1 bis 10, dadurch gekennzeichnet, daß der Rotor (12) motorisch angetrieben wird.

13. Schuhbearbeitungsmaschine nach einem oder mehreren der vorstehenden Ansprüche, dadurch gekennzeichnet, daß der Exhaustor (5) dem Filter (4) nachgeschaltet ist.

14. Schuhbearbeitungsmaschine nach einem oder mehreren der vorstehenden Ansprüche 1 bis 11, dadurch gekennzeichnet, daß der Exhaustor (5) dem Filter (4) vorgeschaltet und der Vorentstaubungseinrichtung (10) nachgeschaltet ist.

15. Schuhbearbeitungsmaschine nach einem oder mehreren der vorstehenden Ansprüche, dadurch gekennzeichnet, daß dieselbe ein Maschinengehäuse (30) mit mindestens einer, mindestens einem Arbeitsaggregat (2) zugeordneten und im Abstand zu diesem angeordneten Staubluftöffnung (31) aufweist, durch welche die Staubluft in eine Vorentstaubungskammer (32) gelangt, welche über die Durchströmöffnung (11) und den davor angeordneten Zentrifugalabweiser (12) mit einer geschlossenen Feinfilterkammer (34) verbunden ist, aus welchem die Luft unter Beaufschlagung des Filters (4) durch diesen hindurch und weiter durch den Exhaustor (5) aus einer Reinluftöffnung (36) des Maschinengehäuses (30) hinausgeführt wird.

16. Schuhbearbeitungsmaschine nach Anspruch 15, dadurch gekennzeichnet, daß die Vorentstaubungskammer (32) zwischen der Feinfilterkammer (34) und einer Maschinenkammer (37) angeordnet ist und daß in der der Trennwand (6) zur Feinfilterkammer (34) gegenüberliegenden Maschinenkammertrennwand (7) koaxial zur Durchströmöffnung (11) eine Öffnung (8) angeordnet ist, durch welche sich eine Antriebswelle (9 W) eines in der Maschinenkammer (37) befindlichen Motors (9), gegen die Maschinenkammertrennwand (7) abgedichtet, bis in die Vorentstaubungskammer (32) erstreckt und dort mit der Rotorplatte (14) und/oder Rotorwelle (15) verbunden ist.

17. Schuhbearbeitungsmaschine nach einem oder mehreren der vorstehenden Ansprüche, dadurch gekennzeichnet, daß der Filter (4) eine im wesentlichen zylindrische Filterpatrone (4) mit einer offenen und einer geschlossenen Stirnseite ist, deren Mantel- und geschlossene Stirnfläche die Filterfläche bildet, und die Filterpatrone (4) in oder vor einer Öffnung (42) in einer Deckwand (41) der Feinfilterkammer (34), mit der offenen Stirnseite nach oben abdichtend, auswechselbar ein- bzw. angehängt ist.

18. Schuhbearbeitungsmaschine nach einem oder mehreren der vorstehenden Ansprüche 15 bis 17, dadurch gekennzeichnet, daß unterhalb der Vorentstaubungseinrichtung (10) in der Vorentstaubungskammer (32) und/oder unterhalb der Filterpatrone (4) in der Feinfilterkammer (34) Staubkästen (33, 35) angeordnet sind, welche durch abdichtend verschließbare Öffnungen entnehmbar sind.

19. Schuhbearbeitungsmaschine nach Anspruch 18, dadurch gekennzeichnet, daß oberhalb des Staubkastens/der Staubkästen (33, 35) unter der Vorentstaubungseinrichtung (10) und/oder unterhalb der Filterpatrone (4) Leitbleche angeordnet sind, welche den herunterfallenden Staub in den Staubkasten (33, 35) leiten und dort zurückhalten.

20. Schuhbearbeitungsmaschine nach einem oder mehreren der vorstehenden Ansprüche 15 bis 19, dadurch gekennzeichnet, daß die Reinluftöffnung (36) des Maschinengehäuses (30) mit einem Schalldämpfer (38) versehen ist.

21. Schuhbearbeitungsmaschine nach einem oder mehreren der vorstehenden Ansprüche, dadurch gekennzeichnet, daß dieselbe eine Schalt- und/oder Steuereinrichtung (39) aufweist, welche mit dem Rotormotor (9) und dem Exhaustor (5) verbunden ist, und welche bei ausgeschaltetem Rotormotor (9) eine Inbetriebnahme des Exhaustors (5) blockiert.
